# EUROPEAN PATENT SPECIFICATION

(11) **EP 0 579 707 B1**
(45) Date of publication and mention of the grant of the patent: **10.10.2001**
(21) Application number: 92909069.4
(22) Date of filing: 13.04.1992
(51) Int. Cl.: G01N 21/17, G01N 21/43, G01D 5/26, G02F 1/11, G02F 1/33

(54) **APPARATUS FOR MEASUREMENT USING AN ACOUSTO-OPTIC DEVICE**
MESSGERAET MIT EINER AKUSTO-OPTISCHEN VORRICHTUNG
APPAREILS DE MESURAGE A L'AIDE DE DISPOSITIF ACOUSTO-OPTIQUE

(30) Priority: 12.04.1991 GB 91077966
(43) Date of publication of application: 26.01.1994
(73) Proprietor: BTG INTERNATIONAL LIMITED, London EC4M 7SB (GB)
(72) Inventor: GASS, Paul Anthony, At. Davids, Exeter EX4 4BP (GB); SAMBLES, John Roy, Copplestone, Crediton, Devon EX17 5NF (GB)
(74) Representative: Cullis, Roger
(86) International application number: GB9200665
(87) International publication number: WO9218845

(56) References cited:
- EP-A- 0 250 070
- EP-A- 0 417 551
- GB-A- 2 209 603
- US-A- 3 914 055
- US-A- 4 627 730
- US-A- 4 741 620
- APPLIED OPTICS vol. 25, no. 18, 15 September 1986, pages 3014 - 3017 H.CHUNG ET AL. 'SIMPLIFIED DIFERENCE PHASE OPTICAL MICROSCOPE' WHOLE DOCUMENT
- APPLIED OPTICS vol. 29, no. 31, 1 November 1990, pages 4694 - 4704 E.FONTANA ET AL. 'SURFACE PLASMON IMMUNOASSAY'
- OPTICS COMMUNICATIONS vol. 59, no. 5, 1 October 1986, pages 361 - 365 K.ODA ET AL. 'INSTANTANEOUS OBSERVATION OF TOTAL REFLECTION SPECTRA'

## Description

This invention relates to the use of acousto-optic devices and, in particular, to phase-sensitive optical measurements using such devices.

Optical techniques are exploited in a very wide range of measurement technologies. An important factor in any measurement is the sensitivity to small changes in the physical property being measured. Therefore an invention which can enhance the sensitivity of several types of optical measurement has many potential applications.

Acousto-optic devices rely on the interaction of optical and acoustic waves within certain transparent materials. They are extensively used in optical systems to control the intensity, wavelength and beam direction of light. The type of acousto-optic device which is used in this invention is an acousto-optical deflector. As its name implies, an acousto-optic deflector will electronically control the angle through which a light beam is deflected on traversing the device. The important features of this device is its very fast scan rate and continuous scan range. In this respect an acousto-optic deflector is superior to its electromechanical equivalent, although more limited in angle and wavelength scan range.

EP-A-025070 discloses an optical reflectance analyser including an acousto-optical tunable filter, which is tuned with a signal generator signal. The modulated beam is incident on a sample and detected by a circuit which includes a lock-in amplifier, which also receives the signal generator signal as reference. There is no disclosure of varying the angle of incidence (and reflectance) of the beam on the sample.

Applied Optics, Vol 29, No. 31, 1 November 1999, p. 4694 "Surface plasmon immunoassay", Fontana et al., discloses a surface plasmon immunoassay wherein a surface of a sample is exposed to a laser beam. The angle of incidence of the laser beam is varied by rotating the sample. The intensity of the beam reflected from the surface is compared with a reference beam to define a ratio value.

According to the present invention there is provided an optical measuring apparatus for measuring the differential of the reflectance characteristic of a plasmon-polariton resonance of a surface of a sample, including: a mounting means arranged to mount said sample so as to receive a probe beam, incident on the sample surface; an optical source to provide a beam of optical radiation; a signal generator to provide a modulation signal at a modulation frequency; an acousto-optical deflector coupled to the signal generator to receive the modulation signal, and arranged to receive said beam of optical radiation in order to modulate the angle of deflection of said beam from the deflector, whereby to provide said probe beam to said sample surface; photo sensitive means arranged to receive the reflected beam from said sample surface to provide a modulated electrical sample signal; phase sensitive signal processing means coupled to the photosensitive means to receive said modulated electrical sample signal and coupled to the signal generator to receive said modulation signal from said signal generator in order to derive an output signal related to said differential of the reflectance characteristic of a plasmon-polariton resonance of the sample surface.

Optionally the phase sensitive signal processing means is a lock-in amplifier.

The invention will now be particularly described with reference to the accompanying drawings in which:
Figure 1 shows the reflectance of a layer of silver on a fused silica prism,
Figure 2 is a schematic representation of apparatus used for measurement of differential reflectance,
Figure 3 shows the reflectance of a layer of silver on a high index glass prism,
Figure 4 is a schematic representation of apparatus used for measurement of small shifts in optical features,
Figure 5 shows the shift in plasmon angle due to water vapour condensing on a silver layer, and
Figures 6 - 9 are explanatory diagrams.

Referring to the drawings, an optical measurement system uses an acousto-optic deflector to modulate the angle of incidence of the light beam which is being used to probe a sample. The optical properties of the sample are angle (momentum) and a suitably placed photodetector will receive a modulated signal at the same frequency as the acousto-optic modulation. This signal is fed to a lock-in amplifier using the acousto-optic modulation frequency as the reference. Only that component of the photodetector signal which is due to the variation of the sample's optical properties will be amplified. Because the size of the output signal from the amplifier is proportional to the modulation of the photodetector signal it is in fact a direct measurement of the differential of the sample's optical properties with respect to angle.

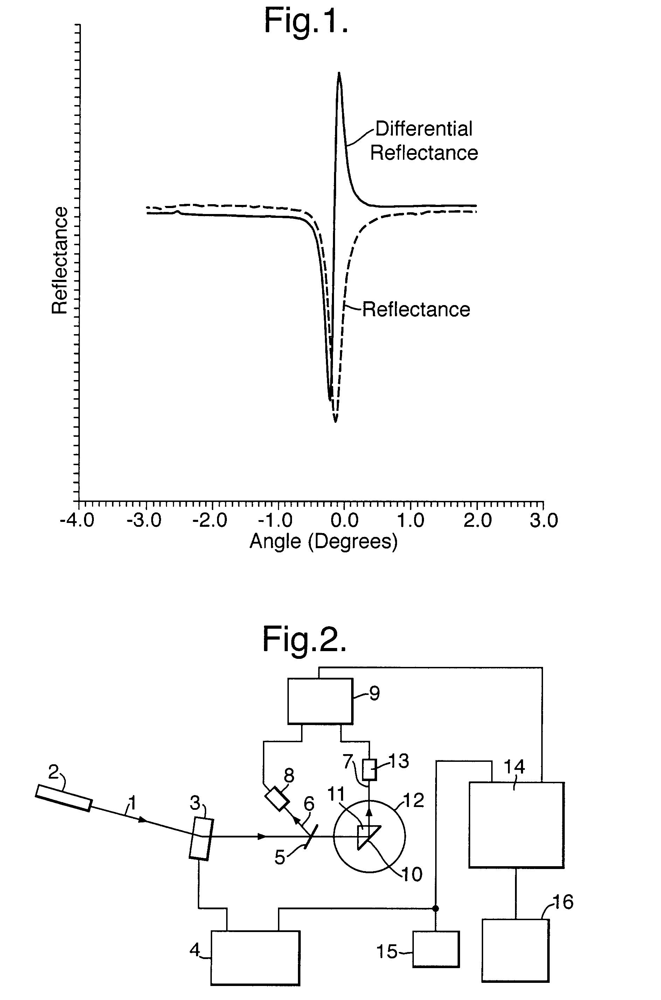

This is illustrated in Figure 1 where the dotted line shows the reflectance as a function of angle for a silver layer on a fused silica prism. The dip in reflectance is caused by a typical surface plasmon-polariton resonance at the silver air interface. The continuous line shows the differential of this reflectance, (dR/dr), which was directly measured using an acousto-optic deflector to modulate the incident angle as illustrated in Figure 2. In this, a beam 1 of radiation from a HeNe laser 2 passes to an acousto-optical deflector 3 controlled by a frequency modulated drive signal from a voltage controlled frequency source 4. A partially reflecting mirror 5 splits the radiation into a reference beam 6 and a probe beam 7. The reference beam is detected by a photodiode 8 and passes to one input of an analogue divide circuit 9. The probe beam is reflected from a silvered layer on one surface 10 of a prism 11 mounted on a computer controlled rotating stage 12. It then passes to a photodiode 13 which is coupled to the other input of the analogue divide circuit 9. A signal representative of the ratio of the signal to reference voltages passes from the divider circuit to an input of a lock-in amplifier 14 which is also fed from the signal generator 15 which which provides a frequency modulation signal to the VCFS. A differential signal passes from the lock-in amplifier to a microcomputer 16.

The importance of measuring the true differential is that it allows the measurement of very weak optical features which would normally be dominated by large, perhaps noisy, background signal. Conventional beam amplitude modulation together with phase sensitive detection will also reduce noise but will not eliminate the effect of large background signals.

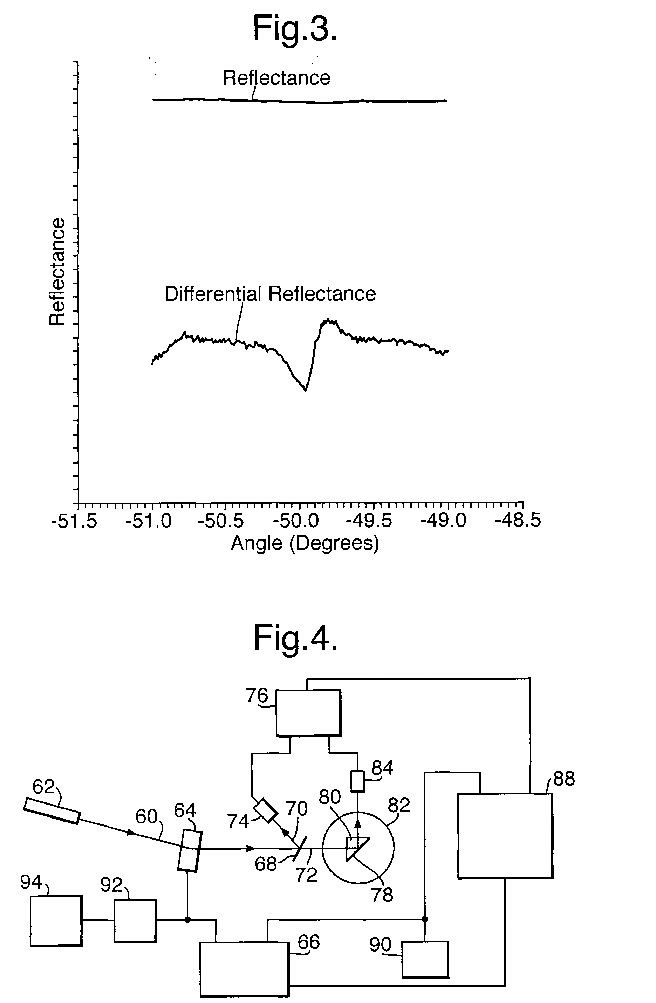

The power of the differential measurement is shown in Figure 3 for an angle modulating implementation. When the reflectance of a thick film of silver deposited on a high index glass prism was measured using a standard amplitude modulated detection system it appeared to be constant over the incident angle range. However, modulating the incident angle with an acousto-optic deflector and with the lock-in amplifier set at very high gain (which accounts for the noise), the presence of a very weak surface plasmon resonance can be resolved from the differential reflectivity.

A further embodiment of the invention allows the measurement of very small changes in the optical properties of the sample. This application requires the construction of the optical analogue of a phase locked loop. In practice this involves feeding back the output from the lock-in amplifier to a voltage controlled frequency source which drives the acousto-optic device as illustrated in Figure 4. In this, a beam 60 of radiation from a HeNe laser 62 passes to an acousto-optical deflector 64 controlled by a frequency modulated drive signal from a voltage controlled oscillator 66. A partially reflecting mirror 68 splits the radiation into a reference beam 70 and a probe beam 72. The reference beam is detected by a photodiode 74 and passes to one input of an analogue divide circuit 76. The probe beam is reflected from a silvered layer on one surface 78 of a prism 80 mounted on a computer controlled rotating stage 82. It then passes to a photodiode 84 which is coupled to the other input of the analogue divide circuit 76. A signal representative of the ratio of the signal to reference voltages passes from the divider circuit to an input of a lock-in amplifier 88 which is also fed from the signal generator 90 which modulates the voltage-controlled frequency source. A feedback signal also passes from the lock-in amplifier to the voltage-controlled frequency source. The output frequency of the voltage-controlled frequency source is continuously measured by a frequency counter 92 and recorded by a microcomputer 94.

If the phase of the feedback is correctly adjusted it is possible for the system to lock on to the angle at which a particular optical feature occurs.

For example if the laser beam after deflection by the acousto-optic deflector is incident on the silver layer in Figure 1 at the angle for minimum reflectance, then the feedback signal from the lock-in amplifier (set to the acousto-optic deflector modulation frequency) is zero. However if the surface plasmon angle shifts in response to a physical change in the sample then a large signal will be fed back from the amplifier to the voltage-controlled frequency source. This signal will pull the centre frequency of the voltage-controlled frequency source and so the deflection angle of the laser beam to restore a null signal. In this way the incident angle is locked to the surface plasmon resonance and any shift in this angle will be measured as a shift in the centre frequency of the voltage-controlled frequency source.

The fact that changes in the angle of an optical feature are converted by the system to changes in frequency of the voltage-controlled frequency source results in a massive increase in sensitivity of the optical measurements. Typical drive frequencies for an acousto-optic deflector are 30-70MHz and in principle these frequencies can be measured with a few Hertz accuracy giving a potential accuracy of 1 part in 10⁷. This is orders of magnitude more than can normally be achieved by direct measurement of the angle.

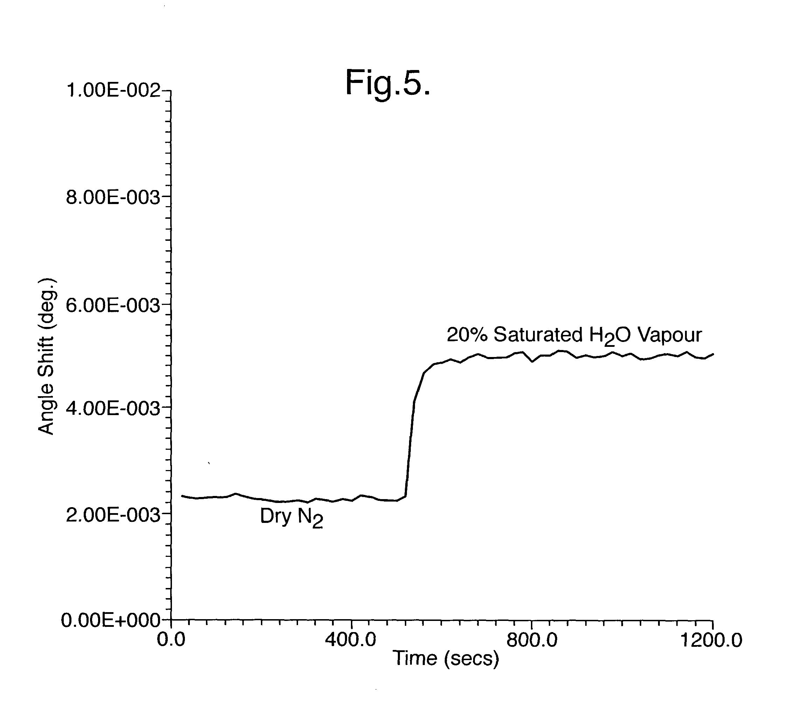

The technique has been demonstrated by sensing small shifts in the plasmon angle caused by unsaturated vapours condensing on to a silver layer. A typical result is shown in Figure 5. In practice mechanical vibration, air currents and thermal drift has limited the sensitivity of the measurement to shifts of 10⁻⁴ degrees. However this is an improvement of two orders of magnitude over the sensitivity previously obtained from this experiment. Also all of the noise generating factors can be reduced by careful device design. One possibility would be to integrate the acousto-optic device and sensor in a single crystal block.

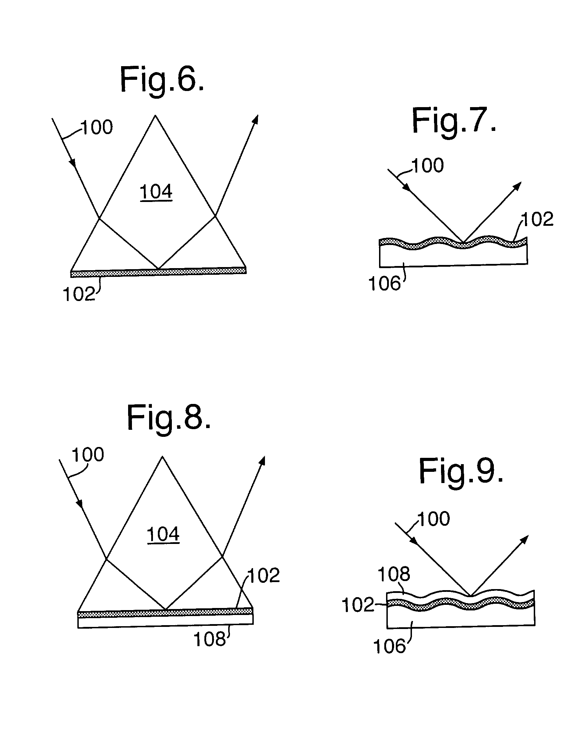

Figure 6 and 7 show embodiments used for detection of thin overlayers on metal surfaces. In these a beam of radiation 100 is reflected by a metal layer 102 on a surface of a prism 104 or grating 106. Alternatively, Figures 8 and 9 illustrate how an overlayer or waveguide of dielectric 108 can be added to the prism or grating of Figures 6 and 7. Small changes in the optical properties of the dielectric will then be measured with great accuracy.

The invention may be applied to many optical measurement techniques. The possibilities include applications which make use of the differential with respect to the angle of incidence (photon momentum), such as detection of thin overlayers (< 10⁻³ of a monolayer) on metal surfaces and detection of small changes of permittivity of an overlayer or waveguide and have applications in electrochemistry, gas sensing, biosensors, chromatography and pyroelectric infrared sensors.

## Claims

1. Optical measuring apparatus for measuring the differential of the reflectance characteristic of a plasmon-polariton resonance of a surface (10) of a sample, including:
a mounting means (11, 12) arranged to mount said sample so as to receive a probe beam, incident on the sample surface;
an optical source (2) to provide a beam of optical radiation;
a signal generator (15) to provide a modulation signal at a modulation frequency;
an acousto-optical deflector (3) coupled to the signal generator to receive the modulation signal, and arranged to receive said beam of optical radiation in order to modulate the angle of deflection of said beam from the deflector, whereby to provide said probe beam to said sample surface;
photo sensitive means (13) arranged to receive the reflected beam from said sample surface to provide a modulated electrical sample signal;
phase sensitive signal processing means (14) coupled to the photosensitive means to receive said modulated electrical sample signal and coupled to the signal generator to receive said modulation signal from said signal generator in order to derive an output signal related to said differential of the reflectance characteristic of a plasmon-polariton resonance of the sample surface.

2. Optical measuring apparatus according to Claim 1 **characterised in that** the phase sensitive signal processing means (14) is a lock-in amplifier.

3. Optical measuring apparatus according to Claim 1 **characterised in that** the optical means comprises a beam splitter means (5) arranged to divide the modulated beam into a modulated probe beam (7) and a modulated reference beam (6),
the apparatus further comprising a second photosensitive means (8) to receive the modulated reference beam and to provide a related electrical signal,
and comprising further signal processing means (9) to receive said signals from the first and second photosensitive means (8, 13) and to derive therefrom a ratio signal representing the ratio of the modulated probe beam and the modulated reference beam,
said phase sensitive signal processing means (14) receiving said ratio signal and said modulation signal and deriving therefrom an output signal related to said differential of said reflectance characteristic of the sample.

4. Optical measuring apparatus according to Claim 3 **characterised in that** the further signal processing means (9) is an analogue divide circuit.

5. Optical measuring apparatus according to Claim 4 **characterised in that** the signal generator (15) is connected to the acousto-optical deflector (3) through a voltage-controlled frequency source (4).

6. Optical measuring apparatus according to Claim 5 **characterised in that** the phase-sensitive signal processing means (14) is connected to the voltage controlled frequency source (4) and supplies said output signal as a feedback signal.

7. Optical measuring apparatus according to Claim 3 **characterised in that** the beam splitter means (5) is arranged to direct the modulated probe beam (7) to the sample under test, and to direct the modulated reference beam (6) to the second photosensitive means (8).

## Patentansprüche

1. Optisches Meßgerät zum Messen des Differentials der Charakteristik des Reflexionsfaktors einer Plasmon-Polariton-Resonanz einer Oberfläche (10) einer Probe, mit:
einer Montageeinrichtung (11, 12), die dafür eingerichtet ist, die Probe zu montieren, um einen auf die Probenoberfläche einfallenden Sondenstrahl zu empfangen;
einer optischen Quelle (2), um einen Strahl optischer Strahlung zu liefern;
einem Signalgenerator (15), um ein Modulationssignal bei einer Modulationsfrequenz zu liefern;
einem akusto-optischen Deflektor (3), der mit dem Signalgenerator gekoppelt ist, um das Modulationssignal zu empfangen, und dafür eingerichtet ist, den Strahl optischer Strahlung zu empfangen, um den Ablenkwinkel des Strahls vom Deflektor zu modulieren, um dadurch den Sondenstrahl zur Probenoberfläche zu liefern;
einer lichtempfindlichen Einrichtung (13), die dafür eingerichtet ist, den reflektierten Strahl von der Probenoberfläche zu empfangen, um ein moduliertes elektrisches Probensignal zu liefern;
einer phasenempfindlichen Signalverarbeitungseinrichtung (14), die mit der lichtempfindlichen Einrichtung gekoppelt ist, um das modulierte elektrische Probensignal zu empfangen, und mit dem Signalgenerator gekoppelt ist, um das Modulationssignal vom Signalgenerator zu empfangen, um ein Ausgangssignal abzuleiten, das sich auf das Differential der Charakteristik des Reflexionsfaktors einer Plasmon-Polariton-Resonanz der Probenoberfläche bezieht.

2. Optisches Meßgerät nach Anspruch 1, **dadurch gekennzeichnet, daß** die phasenempfindliche Signalverarbeitungseinrichtung (14) ein Lock-in-Verstärker ist.

3. Optisches Meßgerät nach Anspruch 1, **dadurch gekennzeichnet, daß** die optische Einrichtung einen Strahlteiler (5) aufweist, der dafür eingerichtet ist, den modulierten Strahl in einen modulierten Sondenstrahl (7) und einen modulierten Referenzstrahl (6) zu teilen,
wobei das Gerät ferner eine zweite lichtempfindliche Einrichtung (8) aufweist, um den modulierten Referenzstrahl zu empfangen und ein darauf bezogenes elektrisches Signal zu liefern,
und ferner eine Signalverarbeitungseinrichtung (9) aufweist, um die Signale von der ersten und zweiten lichtempfindlichen Einrichtung (8, 13) zu empfangen und daraus ein Verhältnissignal abzuleiten, das das Verhältnis des modulierten Sondenstrahls und des modulierten Referenzstrahls repräsentiert,
wobei die phasenempfindliche Signalverarbeitungseinrichtung (14) das Verhältnissignal und das Modulationssignal empfängt und daraus ein Ausgangssignal ableitet, das sich auf das Differential der Charakteristik des Reflexionsfaktors der Probe bezieht.

4. Optisches Meßgerät nach Anspruch 3, **dadurch gekennzeichnet, daß** die weitere Signalverarbeitungseinrichtung (9) eine Analog-Teilungsschaltung ist.

5. Optisches Meßgerät nach Anspruch 4, **dadurch gekennzeichnet, daß** der Signalgenerator (15) mit dem akustooptischen Deflektor (3) über eine spannungsgesteuerte Frequenzquelle (4) verbunden ist.

6. Optisches Meßgerät nach Anspruch 5, **dadurch gekennzeichnet, daß** die phasenempfindliche Signalverarbeitungseinrichtung (14) mit der spannungsgesteuerten Frequenzquelle (4) verbunden ist und das Ausgangssignal als Rückkopplungssignal liefert.

7. Optisches Meßgerät nach Anspruch 3, **dadurch gekennzeichnet, daß** der Strahlteiler (5) dafür eingerichtet ist, den modulierten Sondenstrahl (7) zur zu testenden Probe zu lenken und den modulierten Referenzstrahl (6) zur zweiten lichtempfindlichen Einrichtung (8) zu lenken.

## Revendications

1. Dispositif de mesure optique pour mesurer le différentiel de la caractéristique de facteur de réflexion d'une résonance plasmon-polariton d'une surface (10) d'un échantillon, comprenant :
un moyen de montage (11, 12) agencé de façon à supporter ledit échantillon de façon à recevoir un faisceau d'exploration, incident sur la surface de l'échantillon ;
une source optique (2) pour délivrer un faisceau de rayonnement optique ;
un générateur de signal (15) pour délivrer un signal de modulation à une fréquence de modulation ;
un déflecteur acousto-optique (3) couplé au générateur de signal pour recevoir le signal de modulation, et agencé de façon à recevoir ledit faisceau de rayonnement optique afin de moduler l'angle de déviation dudit faisceau à partir du déflecteur, de façon à délivrer ainsi ledit faisceau d'exploration à ladite surface d'échantillon ;
des moyens photosensibles (13) agencés pour recevoir le faisceau réfléchi depuis ladite surface d'échantillon afin de délivrer un signal d'échantillon électrique modulé ;
des moyens de traitement de signal sensibles à la phase (14) couplés aux moyens photosensibles afin de recevoir ledit signal d'échantillon électrique modulé et couplés au générateur de signal pour recevoir ledit signal de modulation dudit générateur de signal afin de dériver un signal de sortie lié audit différentiel de la caractéristique de facteur de réflexion d'une résonance plasmon-polariton de la surface de l'échantillon.

2. Dispositif de mesure optique selon la revendication 1, **caractérisé en ce que** les moyens de traitement de signal sensibles à la phase (14) sont un amplificateur synchrone.

3. Dispositif de mesure optique selon la revendication 1, **caractérisé en ce que** les moyens optiques comprennent des moyens formant diviseur de faisceau (5) agencés pour diviser le faisceau modulé en un faisceau d'exploration modulé (7) et un faisceau de référence modulé (6),
le dispositif comprenant de plus des deuxièmes moyens photosensibles (8) pour recevoir le faisceau de référence modulé et pour délivrer un signal électrique associé,
et comprenant d'autres moyens de traitement de signal (9) pour recevoir lesdits signaux depuis les premiers et deuxièmes moyens photosensibles (8, 13) et pour dériver à partir de ceux-ci un signal de rapport représentant le rapport du faisceau d'exploration modulé et du faisceau de référence modulé,
lesdits moyens de traitement du signal sensibles à la phase (14) recevant ledit signal de rapport et ledit signal de modulation et dérivant à partir de ceux-ci un signal de sortie lié audit différentiel de ladite caractéristique de facteur de réflexion de l'échantillon.

4. Dispositif de mesure optique selon la revendication 3, **caractérisé en ce que** les autres moyens de traitement de signal (9) sont un circuit de division analogique.

5. Dispositif de mesure optique selon la revendication 4, **caractérisé en ce que** le générateur de signal (15) est connecté au déflecteur acousto-optique (3) par l'intermédiaire d'une source de fréquence commandée en tension (4).

6. Dispositif de mesure optique selon la revendication 5, **caractérisé en ce que** les moyens de traitement de signal sensibles à la phase (14) sont connectés à la source de fréquence commandée en tension (4) et délivrent ledit signal de sortie comme signal de rétroaction.

7. Dispositif de mesure optique selon la revendication 3, **caractérisé en ce que** les moyens formant diviseur de faisceau (5) sont agencés de façon à diriger le faisceau de sonde modulé (7) vers l'échantillon qui est analysé, et à diriger le faisceau de référence modulé (6) vers les deuxièmes moyens photosensibles (8).
